# EUROPEAN PATENT APPLICATION

(11) **EP 4 160 149 A1**
(43) Date of publication of application: **05.04.2023**
(21) Application number: 22181972.5
(22) Date of filing: 29.06.2022
(51) Int. Cl.: G01C 21/30, G01C 21/00

(54) **ROAD NETWORK DATA PROCESSING METHOD AND APPARATUS, ELECTRONIC DEVICE, STORAGE MEDIUM, AND PROGRAM PRODUCT**

(30) Priority: 30.09.2021 CN 202111161898
(71) Applicant: BEIJING BAIDU NETCOM SCIENCE TECHNOLOGY CO., LTD., Beijing 100085 (CN)
(72) Inventor: TONG, Juntao, Beijing, 100085 (CN)
(74) Representative: Studio Torta S.p.A.

(57) **Abstract**

The present disclosure provides a road network data processing method and apparatus, an electronic device, a storage medium, and a computer program product, and relates to the field of the intelligent transportation. The specific implementation scheme includes: determining a target road surface in a road image, wherein the target road surface is a road surface matching a road line in first road network data, the road image is an image, for a road, obtained according to a satellite image, and the first road network data is original road network data of a basic base map of an electronic map; and adjusting the road line to a road surface corresponding to a road width of the target road surface, to obtain second road network data of the basic base map. Because the target road surface is the image, for the road, obtained according to the satellite image, the road width of the target road surface can more truly reflect the width of the real road. Taking the second road network data as the road network data of the basic base map can more accurately reflect the actual situation of the real road.

## Description

### TECHNICAL FIELD

The present disclosure relates to the field of artificial intelligence, in particular to intelligent transportation technology, and is specifically applicable to the smart city and intelligent transportation scenarios.

### BACKGROUND

With the development of the computer technology and the popularization of vehicles, the manner of using line data to represent the real road in the real world in the basic base map of the electronic map is more and more unable to meet people's requirements for the electronic map.

In order to more truly reflect the condition of the real road, there are many methods in the existing technology that use road surfaces to replace road lines to represent real roads, for example, virtual road surface generation method based on the center line and the number of lanes, road surface generation method based on lane line elements, etc. Although the above methods can represent the real road in the form of the road surface, the above method of using the road surface to replace the road line to represent the real road often cannot accurately reflect the actual situation of the real road.

### SUMMARY

The present disclosure provides a road network data processing method and apparatus, an electronic device, a storage medium, and a computer program product, so that the electronic map can more accurately reflect the actual situation of the real road.

According to a first aspect of the present disclosure, a road network data processing method is provided. The method may include:
determining a target road surface in a road image, wherein the target road surface is a road surface matching a road line in first road network data, the road image is an image, for a road, obtained according to a satellite image, and the first road network data is original road network data of a basic base map of an electronic map; and
adjusting the road line to a road surface corresponding to a road width of the target road surface, to obtain second road network data of the basic base map.

According to a second aspect of the present disclosure, a road network data processing apparatus is provided. The apparatus may include:
a road surface matching unit, configured for determining a target road surface in a road image, wherein the target road surface is a road surface matching a road line in first road network data, the road image is an image, for a road, obtained according to a satellite image, and the first road network data is original road network data of a basic base map of an electronic map; and
a second road network data obtaining unit, configured for adjusting the road line to a road surface corresponding to a road width of the target road surface, to obtain second road network data of the basic base map.

According to another aspect of the present disclosure, an electronic device is provided, including:
at least one processor; and
a memory connected communicatively to the at least one processor, wherein the memory stores instructions executable by the at least one processor, and the instructions, when executed by the at least one processor, enable the at least one processor to perform the method in any one embodiment of the present disclosure.

According to another aspect of the present disclosure, a non-transitory computer-readable storage medium storing computer instructions is provided. The computer instructions, when executed by a computer, cause the computer to perform the method in any one embodiment of the present disclosure.

According to another aspect of the present disclosure, there is provided a computer program product including a computer program/computer instructions, wherein the computer program/computer instructions, when executed by a processor, implements/implement the method in any one embodiment of the present disclosure.

In the technology of the present disclosure, first, the target road surface matching the road line in the first road network data is determined in the road image, for the road, obtained according to the satellite image, and then the road line is adjusted to a road surface corresponding to the road width of the matched target road surface, so as to obtain the second road network data of the basic base map. Because the target road surface is the image, for the road, obtained according to the satellite image, the road width of the target road surface can more truly reflect the width of the real road. Therefore, taking the second road network data as the road network data of the basic base map can more accurately reflect the actual situation of the real road.

It should be understood that the contents described in this section are not intended to recognize key or important features of embodiments of the present disclosure, nor are they intended to limit the scope of the present disclosure. Other features of the present disclosure will become easily understood from the following description.

### BRIEF DESCRIPTION OF THE DRAWINGS

The drawings are used to better understand the solution and do not constitute a limitation to the present disclosure. In the drawings:
FIG. 1 is a flowchart of a road network data processing method provided by an embodiment of the present disclosure.
FIG. 2 is a flowchart of a method for determining a road image provided in an embodiment of the present disclosure.
FIG. 3 is a flowchart of a method for determining a target road surface provided in the embodiment of the present disclosure.
FIG. 4 is a flowchart of a road line adjustment method provided in the embodiment of the present disclosure.
FIG. 5 is a schematic diagram of expansion of a road line provided in the embodiment of the present disclosure.
FIG. 6 is another schematic diagram of expansion of a road line provided in the embodiment of the present disclosure.
FIG. 7 is a schematic diagram of a road network data processing apparatus provided by an embodiment of the present disclosure.
FIG. 8 is a schematic diagram of an electronic device provided by an embodiment of the present disclosure.

### DETAILED DESCRIPTION

The exemplary embodiments of the present disclosure will be described below in combination with drawings, including various details of the embodiments of the present disclosure to facilitate understanding, which should be considered as exemplary only. Therefore, those of ordinary skill in the art should realize that various changes and modifications can be made to the embodiments described herein without departing from the scope and spirit of the present disclosure. Likewise, descriptions of well-known functions and structures are omitted in the following description for clarity and conciseness.

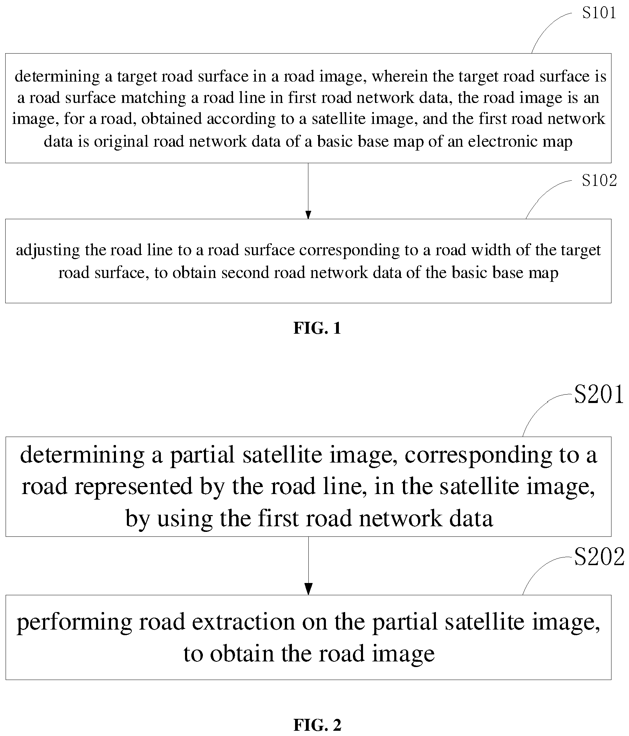

The present disclosure provides a road network data processing method. Specifically referring to FIG. 1, FIG. 1 is a flowchart of a road network data processing method provided by an embodiment of the present disclosure. The method may include:
S 101: determining a target road surface in a road image, wherein the target road surface is a road surface matching a road line in first road network data, the road image is an image, for a road, obtained according to a satellite image, and the first road network data is original road network data of a basic base map of an electronic map; and
S102: adjusting the road line to a road surface corresponding to a road width of the target road surface, to obtain second road network data of the basic base map.

In the road network data processing method provided in the embodiment of the present disclosure, first, the target road surface matching the road line in the first road network data is determined in the road image, for the road, obtained according to the satellite image, and then the road line is adjusted to a road surface corresponding to the road width of the matched target road surface, so as to obtain the second road network data of the basic base map. Because the target road surface is the image, for the road, obtained according to the satellite image, the road width of the target road surface can more truly reflect the width of the real road. Therefore, taking the second road network data as the road network data of the basic base map can more accurately reflect the actual situation of the real road.

The so-called road image refers to the image containing a road, obtained after semantic segmentation of the satellite image.

In order to ensure that the road image can be obtained accurately and the workload of road image extraction is reduced, the following method is adopted in the embodiment of the present disclosure to determine the road image. For details, please refer to FIG. 2, which is a flowchart of a method for determining a road image provided in an embodiment of the present disclosure.

S201: determining a partial satellite image, corresponding to a real road represented by the road line, in the satellite image, by using the first road network data; and S202: performing road extraction on the partial satellite image, to obtain the road image.

The specific implementation manner of determining a partial satellite image, corresponding to a real road represented by the road line, in the satellite image, by using the first road network data may include: first, determining the position information corresponding to the road line by using the first network data; and then, based on the position information corresponding to the road line, searching for the partial satellite image at the corresponding position of the satellite image.

In order to avoid repeated operations in obtaining the partial satellite image and improve the extraction efficiency of the road image, before searching for the partial satellite image at the corresponding position of the satellite image based on the position information corresponding to the road line, the satellite image can be divided into multiple grids with uniform size, then the partial satellite image can be searched for according to the grids, and after each grid is searched, the grid can be labeled accordingly to avoid a repeated search operation.

The specific implementation manner of performing road extraction on the partial satellite image to obtain the road image can include: performing semantic segmentation on the partial satellite image based on the trained U-shaped full convolution network (u-net), to extract a road in the partial satellite image, thereby obtaining the road image.

The trained U-shaped full convolution network is a model trained based on sample satellite images and corresponding labeled roads. In a case of obtaining the road image based on the trained U-shaped structure full convolution network, the partial satellite image to be processed is input to the trained U-shaped structure full convolution network, to obtain the road image corresponding to the partial satellite image to be processed.

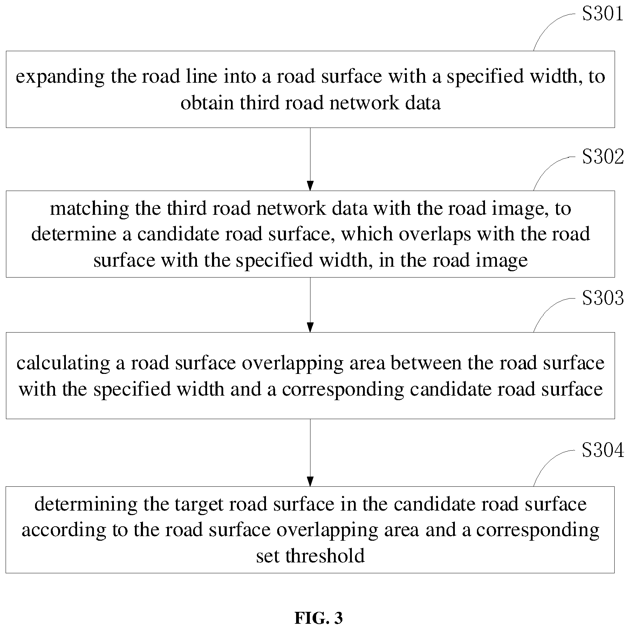

In the embodiment of the present disclosure, the operation of determining the target road surface, matching the road line in the first road network data, in the road image is shown in FIG. 3, which is a flowchart of a method for determining a target road surface provided in an embodiment of the present disclosure.
S301: expanding the road line into a road surface with a specified width, to obtain third road network data;
S302: matching the third road network data with the road image, to determine a candidate road surface, which overlaps with the road surface with the specified width, in the road image;
S303: calculating a road surface overlapping area between the road surface with the specified width and a corresponding candidate road surface; and
S304: determining the target road surface in the candidate road surface according to the road surface overlapping area and a corresponding set threshold.

In the processes such as data collection and data processing, due to problems of the data collection device, etc., the road network data and the satellite image may cause both the road line in the road network data and the road in the road image to deviate from the actual position of the real road which they represent. Based on the road surface overlapping area and the corresponding set threshold, the target road surface, matching the road line, in the road image is determined, which can reduce the problem, brought about by the fact, caused by the deviation, that the road line in the road network data cannot accurately match the road in the road image.

The manner of expanding the road line into a road surface with a specified width, includes, but is not limited to, expanding the road line by using the buffer generation method. The so-called specified width is generally a width determined according to the a priori value. For example, it can be 10 m, that is, the road line is taken as the center, and the road line is symmetrically expanded into the road surface of about 5 m in the left-right direction.

The specific implementation manner of determining the target road surface in the candidate road surface according to the road surface overlapping area and the corresponding set threshold can include: determining a ratio of the road surface overlapping area to the road surface with the specified width; and determining a candidate road surface whose ratio reaches the corresponding set ratio threshold as the target road surface. For example, if the ratio of the road surface overlapping area to the road surface with the specified width reaches 70%, a candidate road surface whose ratio reaches 70% is determined as the target road surface.

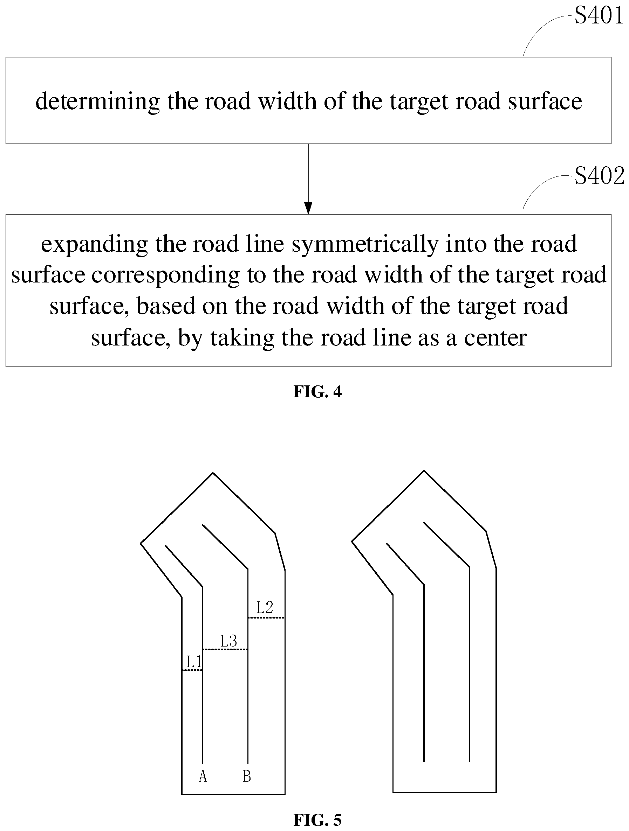

In the embodiment of the present disclosure, the operation of adjusting the road line is shown in FIG. 4. FIG. 4 is a flowchart of a road line adjustment method provided in an embodiment of the present disclosure.
S401: determining the road width of the target road surface; and
S402: expanding the road line symmetrically into the road surface corresponding to the road width of the target road surface, based on the road width of the target road surface, by taking the road line as a center.

First, the road width of the target road surface is determined, and then the road line is expanded symmetrically into the road surface corresponding to the road width of the target road surface on the basis of the road line, which can ensure that the second network data that can more truly reflect the width of the real road can be obtained on the basis of the first network data without re-collecting the road network data.

In addition, when using the road line to represent the real road, there are often up and down lanes, belonging to the same road, represented as two different road lines, so that the lane lines cannot truly reflect the real road. In order to solve this problem, in the embodiment of the present disclosure, in a case where there are adjacent road lines matching the same target road surface, the adjacent road lines are symmetrically expanded into the road surface corresponding to the road width of the target road surface, by taking the adjacent road lines as a center.

In a case where there are adjacent road lines matching the same target road surface, in the present disclosure, the manner of determining the road width of the target road surface includes: first, determining the adjacent road lines as up and down road lines required to be merged; then, determining first distances from the up and down road lines required to be merged to respective adjacent roadside sidelines, wherein the adjacent roadside sidelines are roadside sidelines of the target road surface; then, determining a second distance between the adjacent road lines; and finally, calculating the road width of the target road surface according to the first distances and the second distance.

FIG. 5 is taken as an example. FIG. 5 is a schematic diagram of expansion of a road line provided in an embodiment of the present disclosure. In FIG. 5, A and B respectively represent the first road line and the second road line in the up and down road lines required to be merged. Both L1 and L2 belong to the first distances, where L1 and L2 respectively represent the distance from the road line A to the adjacent roadside sideline and the distance from the road line B to the adjacent roadside sideline. L3 is the second distance. The right side of FIG. 5 shows the expanded road surface. The distances from the up and down road lines required to be merged to the roadside sidelines of the expanded road surface are: (L1 + L2) / 2.

In order to expand the road line simply and conveniently, in a case where there are no adjacent road lines matching the same target road surface, that is, in a case where there are no up and down road lines required to be merged in the first road network, the embodiment of the present disclosure may determine the road width of the target road surface in the following manner: first, determining third distances from the road line to two roadside sidelines of the target road surface; and then calculating the road width of the target road surface according to the third distances.

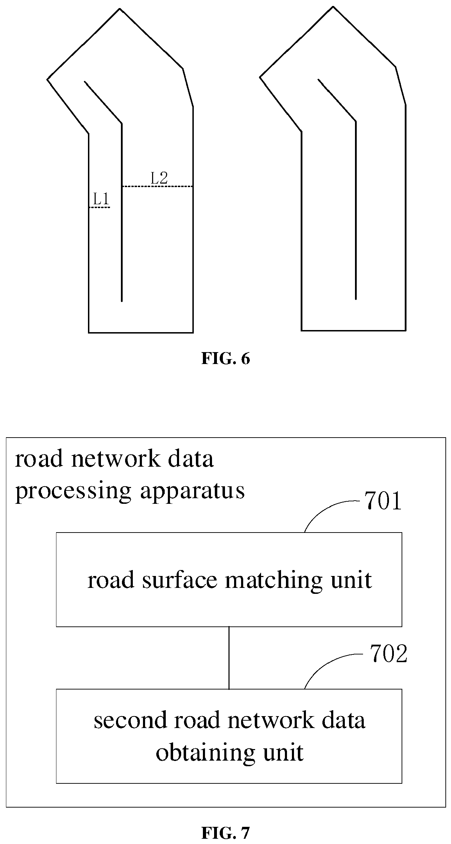

FIG. 6 is taken as an example. FIG. 6 is another schematic diagram of expansion of a road line provided in the embodiment of the present disclosure. In FIG. 6, L1 and L2 belong to the third distances, where L1 represents the distance from the road line to the left roadside sideline, and L2 represents the distance from the road line to the right roadside sideline. The right side of FIG. 6 shows the expanded road surface.

The embodiment of the present disclosure can also plan the navigation of the user based on the second road network data.

As shown in FIG. 7, the embodiment of the present disclosure provides a road network data processing apparatus. The apparatus includes:
a road surface matching unit 701, configured for determining a target road surface in a road image, wherein the target road surface is a road surface matching a road line in first road network data, the road image is an image, for a road, obtained according to a satellite image, and the first road network data is original road network data of a basic base map of an electronic map; and
a second road network data obtaining unit 702, configured for adjusting the road line to a road surface corresponding to a road width of the target road surface, to obtain second road network data of the basic base map.

In an implementation manner, the road surface matching unit 701 includes:
a partial satellite image determination subunit, configured for determining a partial satellite image, corresponding to a real road represented by the road line, in the satellite image, by using the first road network data; and
a road image obtaining subunit, configured for performing road extraction on the partial satellite image, to obtain the road image.

In an implementation manner, the road surface matching unit 701 may include:
a third road network data obtaining subunit, configured for expanding the road line into a road surface with a specified width, to obtain third road network data;
a candidate road surface determination subunit, configured for matching the third road network data with the road image, to determine a candidate road surface, which overlaps with the road surface with the specified width, in the road image;
a road surface overlapping area calculation subunit, configured for calculating a road surface overlapping area between the road surface with the specified width and a corresponding candidate road surface; and
a target road surface determination subunit, configured for determining the target road surface in the candidate road surface according to the road surface overlapping area and a corresponding set threshold.

In an implementation manner, the second road network data obtaining unit 702 may include:
a road width determination subunit, configured for determining the road width of the target road surface; and
a road surface expanding subunit, configured for expanding the road line symmetrically into the road surface corresponding to the road width of the target road surface, based on the road width of the target road surface, by taking the road line as a center.

In an implementation manner, the road width determination subunit may include:
a road line determination subunit, configured for, in a case where there are adjacent road lines matching a same target road surface, determining the adjacent road lines as up and down road lines required to be merged;
a first distance determination subunit, configured for determining first distances from the up and down road lines required to be merged to respective adjacent roadside sidelines, wherein the adjacent roadside sidelines are roadside sidelines of the target road surface;
a second distance determination subunit, configured for determining a second distance between the adjacent road lines; and
a first road width calculation subunit, configured for calculating the road width of the target road surface according to the first distances and the second distance.

In an implementation manner, the road surface expanding subunit may include:
a first road surface expanding subunit, configured for expanding the adjacent road lines symmetrically into the road surface corresponding to the road width of the target road surface, by taking the adjacent road lines as the center.

In an implementation manner, the road width determination subunit includes:
a third distance determination subunit, configured for, in a case where there are no adjacent road lines matching a same target road surface, determining third distances from the road line to two roadside sidelines of the target road surface; and
a second road width calculation subunit, configured for calculating the road width of the target road surface according to the third distances.

In the technical solution of the present disclosure, the acquisition, storage, application, etc., of the user's personal information comply with the provisions of relevant laws and regulations, and do not violate public order and good customs.

According to embodiments of the present disclosure, the embodiments of the present disclosure also provide an electronic apparatus and a readable storage medium.

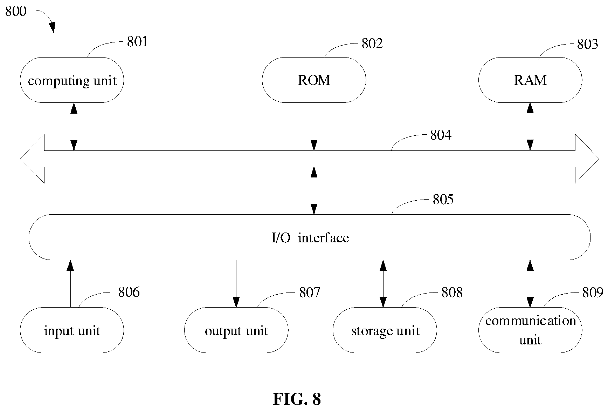

FIG. 8 shows a schematic block diagram of an example electronic device 800 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital assistants, cellular phones, smart phones, wearable devices, and other similar computing apparatuses. The components shown herein, their connections and relationships, and their functions are merely examples, and are not intended to limit the implementation of the present disclosure described and/or claimed herein.

As shown in FIG. 8, the device 800 includes a computing unit 801 that can perform various appropriate actions and processes according to a computer program stored in a read only memory (ROM) 802 or a computer program loaded from the storage unit 808 into a random access memory (RAM) 803. In the RAM 803, various programs and data required for the operation of the device 800 can also be stored. The computing unit 801, the ROM 802, and the RAM 803 are connected to each other through a bus 804. The input/output (I/O) interface 805 is also connected to the bus 804.

A plurality of components in the device 800 are connected to the I/O interface 805, including: an input unit 806, such as a keyboard, a mouse, etc.; an output unit 807, such as various types of displays, speakers, etc.; a storage unit 808, such as a magnetic disk, an optical disk, etc.; and a communication unit 809, such as a network card, a modem, a wireless communication transceiver, etc. The communication unit 809 allows the device 800 to exchange information/data with other devices through computer networks such as the Internet and/or various telecommunication networks.

The computing unit 801 may be various general-purpose and/or special-purpose processing components with processing and computing capabilities. Some examples of the computing unit 801 include, but are not limited to, a central processing unit (CPU), a graphics processing unit (GPU), various special-purpose artificial intelligence (AI) computing chips, various computing units running machine learning model algorithms, digital signal processors (DSPs), and any appropriate processors, controllers, microcontrollers, etc. The computing unit 801 performs various methods and processes described above, such as road network data processing method. For example, in some embodiments, the road network data processing method may be implemented as a computer software program that is tangibly contained in a machine-readable medium, such as a storage unit 808. In some embodiments, part or all of the computer program may be loaded into and/or installed on the device 800 via the ROM 802 and/or the communication unit 809. When the computer program is loaded into the RAM 803 and performed by the computing unit 801, one or more operations of the road network data processing method described above may be performed. Optionally, in other embodiments, the computing unit 801 may be configured for performing the road network data processing method by any other suitable means (for example, by means of firmware).

Various embodiments of the systems and technologies described above herein can be implemented in a digital electronic circuit system, an integrated circuit system, a field programmable gate array (FPGA), an application specific integrated circuit (ASIC), an application special standard product (ASSP), a system on chip (SOC), a load programmable logic device (CPLD), a computer hardware, firmware, software and/or combinations thereof. These various embodiments may include: implementations in one or more computer programs which may be executed and/or interpreted on a programmable system that includes at least one programmable processor, which may be a special-purpose or general-purpose programmable processor that may receive data and instructions from a storage system, at least one input device, and at least one output device, and transmit the data and instructions to the storage system, the at least one input device, and the at least one output device.

The program codes for implementing the method of the present disclosure may be written in any combination of one or more programming languages. These program codes can be provided to the processor or controller of a general-purpose computer, a special-purpose computer or other programmable data processing apparatuses, such that the program codes, when executed by the processor or controller, enables the functions/operations specified in the flowchart and/or block diagram to be implemented. The program codes can be executed completely on the machine, partially on the machine, partially on the machine and partially on the remote machine as a separate software package, or completely on the remote machine or server.

In the context of the present disclosure, a machine-readable medium may be a tangible medium that may contain or store programs for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above contents. A more specific example of the machine-readable storage medium will include an electrical connection based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with a user, the system and technology described herein may be implemented on a computer which has: a display apparatus (for example, a CRT (cathode ray tube) or an LCD (liquid crystal display) monitor) for displaying information to the user; and a keyboard and pointing apparatus (for example, a mouse or a trackball), through which the user may provide input to the computer. Other kinds of apparatuses may also be used to provide interactions with a user; for example, the feedback provided to a user may be any form of sensory feedback (for example, visual feedback, auditory feedback, or tactile feedback); and input from a user may be received using any form (including acoustic input, voice input, or tactile input).

The systems and techniques described herein may be implemented in a computing system (for example, as a data server) that includes back-end components, or be implemented in a computing system (for example, an application server) that includes middleware components, or be implemented in a computing system (for example, a user computer with a graphical user interface or a web browser through which the user may interact with the implementation of the systems and technologies described herein) that includes front-end components, or be implemented in a computing system that includes any combination of such back-end components, intermediate components, or front-end components. The components of the system may be interconnected by any form or medium of digital data communication (for example, a communication network). The example of the communication network includes a local area network (LAN), a wide area network (WAN), and the Internet.

The computer system may include a client and a server. The client and the server are generally remote from each other and typically interact through a communication network. The client-server relationship is generated by computer programs that run on respective computers and have a client-server relationship with each other. The server can be a cloud server, a server of a distributed system, or a server combined with a blockchain.

It should be understood that various forms of processes shown above may be used to reorder, add, or delete operations. For example, respective operations described in the present disclosure may be executed in parallel, or may be executed sequentially, or may be executed in a different order, as long as the desired result of the technical solution disclosed in the present disclosure can be achieved, no limitation is made herein.

The above specific embodiments do not constitute a limitation on the protection scope of the present disclosure. It should be understood by those skilled in the art that various modifications, combinations, sub-combinations, and substitutions may be made according to design requirements and other factors. Any modification, equivalent replacement and improvement, and the like made within the spirit and principle of the present disclosure shall fall in the protection scope of the present disclosure.

## Claims

1. A road network data processing method, comprising:
determining (S101) a target road surface in a road image, wherein the target road surface is a road surface matching a road line in first road network data, the road image is an image, for a road, obtained according to a satellite image, and the first road network data is original road network data of a basic base map of an electronic map; and
adjusting (S102) the road line to a road surface corresponding to a road width of the target road surface, to obtain second road network data of the basic base map.

2. The method of claim 1, wherein the road image is determined by:
determining (S201) a partial satellite image, corresponding to a real road represented by the road line, in the satellite image, by using the first road network data; and
performing (S202) road extraction on the partial satellite image, to obtain the road image.

3. The method of claim 1 or 2, wherein the determining (S101) the target road surface in the road image, comprises:
expanding (S301) the road line into a road surface with a specified width, to obtain third road network data;
matching (S302) the third road network data with the road image, to determine a candidate road surface, which overlaps with the road surface with the specified width, in the road image;
calculating (S303) a road surface overlapping area between the road surface with the specified width and a corresponding candidate road surface; and
determining (S304) the target road surface in the candidate road surface according to the road surface overlapping area and a corresponding set threshold.

4. The method of any one of claims 1 to 3, wherein the adjusting (S102) the road line to the road surface corresponding to the road width of the target road surface, comprises:
determining (S401) the road width of the target road surface; and
expanding (S402) the road line symmetrically into the road surface corresponding to the road width of the target road surface, based on the road width of the target road surface, by taking the road line as a center.

5. The method of claim 4, wherein in a case where there are adjacent road lines matching a same target road surface, the determining (S401) the road width of the target road surface comprises:
determining the adjacent road lines as up and down road lines required to be merged;
determining first distances from the up and down road lines required to be merged to respective adjacent roadside sidelines, wherein the adjacent roadside sidelines are roadside sidelines of the target road surface;
determining a second distance between the adjacent road lines; and
calculating the road width of the target road surface according to the first distances and the second distance,
optionally, wherein the expanding (S402) the road line symmetrically into the road surface corresponding to the road width of the target road surface, based on the road width of the target road surface, by taking the road line as the center, comprises:
expanding the adjacent road lines symmetrically into the road surface corresponding to the road width of the target road surface, by taking the adjacent road lines as the center.

6. The method of claim 4, wherein in a case where there are no adjacent road lines matching a same target road surface, the determining (S401) the road width of the target road surface comprises:
determining third distances from the road line to two roadside sidelines of the target road surface; and
calculating the road width of the target road surface according to the third distances.

7. A road network data processing apparatus, comprising:
a road surface matching unit (701), configured for determining a target road surface in a road image, wherein the target road surface is a road surface matching a road line in first road network data, the road image is an image, for a road, obtained according to a satellite image, and the first road network data is original road network data of a basic base map of an electronic map; and
a second road network data obtaining unit (702), configured for adjusting the road line to a road surface corresponding to a road width of the target road surface, to obtain second road network data of the basic base map.

8. The apparatus of claim 7, wherein the road surface matching unit (701) comprises:
a partial satellite image determination subunit, configured for determining a partial satellite image, corresponding to a real road represented by the road line, in the satellite image, by using the first road network data; and
a road image obtaining subunit, configured for performing road extraction on the partial satellite image, to obtain the road image.

9. The apparatus of claim 7 or 8, wherein the road surface matching unit (701) comprises:
a third road network data obtaining subunit, configured for expanding the road line into a road surface with a specified width, to obtain third road network data;
a candidate road surface determination subunit, configured for matching the third road network data with the road image, to determine a candidate road surface, which overlaps with the road surface with the specified width, in the road image;
a road surface overlapping area calculation subunit, configured for calculating a road surface overlapping area between the road surface with the specified width and a corresponding candidate road surface; and
a target road surface determination subunit, configured for determining the target road surface in the candidate road surface according to the road surface overlapping area and a corresponding set threshold.

10. The apparatus of any one of claims 7 to 9, wherein the second road network data obtaining unit (702) comprises:
a road width determination subunit, configured for determining the road width of the target road surface; and
a road surface expanding subunit, configured for expanding the road line symmetrically into the road surface corresponding to the road width of the target road surface, based on the road width of the target road surface, by taking the road line as a center.

11. The apparatus of claim 10, wherein the road width determination subunit comprises:
a road line determination subunit, configured for, in a case where there are adjacent road lines matching a same target road surface, determining the adjacent road lines as up and down road lines required to be merged;
a first distance determination subunit, configured for determining first distances from the up and down road lines required to be merged to respective adjacent roadside sidelines, wherein the adjacent roadside sidelines are roadside sidelines of the target road surface;
a second distance determination subunit, configured for determining a second distance between the adjacent road lines; and
a first road width calculation subunit, configured for calculating the road width of the target road surface according to the first distances and the second distance,
optionally, wherein the road surface expanding subunit comprises:
a first road surface expanding subunit, configured for expanding the adjacent road lines symmetrically into the road surface corresponding to the road width of the target road surface, by taking the adjacent road lines as the center.

12. The apparatus of claim 10, wherein the road width determination subunit comprises:
a third distance determination subunit, configured for, in a case where there are no adjacent road lines matching a same target road surface, determining third distances from the road line to two roadside sidelines of the target road surface; and
a second road width calculation subunit, configured for calculating the road width of the target road surface according to the third distances.

13. An electronic device, comprising:
at least one processor; and
a memory connected communicatively to the at least one processor, wherein
the memory stores instructions executable by the at least one processor, and the instructions, when executed by the at least one processor, enable the at least one processor to perform the method of any one of claims 1 to 6.

14. A non-transitory computer-readable storage medium storing computer instructions, wherein the computer instructions, when executed by a computer, cause the computer to perform the method of any one of claims 1 to 6.

15. A computer program product comprising a computer program/computer instructions, wherein the computer program/computer instructions, when executed by a processor, implements/implement the method of any one of claims 1 to 6.
